# EUROPEAN PATENT APPLICATION

(11) **EP 1 878 786 A1**
(43) Date of publication of application: **16.01.2008**
(21) Application number: 06380201.1
(22) Date of filing: 14.07.2006
(51) Int. Cl.: C11B 7/00, A23D 7/02, A23D 9/02

(54) **Liquid and stable oil fractions**

(71) Applicant: CONSEJO SUPERIOR DE INVESTIGACIONES CIENTIFICAS (CSIC), 28006 Madrid (ES)
(72) Inventor: Martinez Force, Enrique Insto. de la Grasa,, E-41012 Sevilla, (ES); Garces Mancheno, Rafael Insto. de la Grasa,, E-41012 Sevilla, (ES); Salas Linan, Joaquin Jesus Insto. de la Grasa,, E-41012 Sevilla, (ES)
(74) Representative: Ungria Lopez, Javier

(57) **Abstract**

The present invention relates to a stable and liquid oil fraction which can be obtained from sunflower high-oleate and high-saturated oils (HOHS). The oil is a olein characterized in that it is a fraction of the HOHS oil having less than 8.6% of SMS, and more than 26% of SMM triacylglycerides, wherein the formula gives the three fatty acids in the triacylglyceride, the sn-1,3 fatty acids are the two external characters and S represents a saturated fatty acid and M represents a monoenoic fatty acid. This oil is non-hydrogenated, is liquid and resistant to oxidation, especially suitable for food applications.

## Description

### FIELD OF THE INVENTION

The present invention relates to olein fractions from high oleic and high saturated sunflower oil, which are particularly suitable for applications in which the oil needs to be liquid and resistant to oxidation. The invention further relates to the use of the oil fraction. Oil fractions with TAGs made from saturated and monounsaturated fatty acids are desired for these technological uses because they are more stable.

### BACKGROUND OF THE INVENTION

Naturally occurring oils are made of triacylglycerols (TAGs) that account for more than 98% of the total oil. Therefore, the chemical and physical properties of the oils are determined by their triacylglyceride composition and the fatty acid distribution on these molecules.

Vegetable fats and oils used for food and other, non-food applications, where high oxidation stability is needed, require a special triacylglyceride composition, mainly if chemical treatments such as hydrogenation are to be avoided. Partially hydrogenated oils contain *trans* isomers of fatty acids that are considered undesirable from a nutritional point of view.

Some commodity oils meet part of these requirements but have technological or nutritional disadvantages. For example, palm oil and palm olein have high stability but they are solid or semi-solid at room temperature due to the disaturated and trisaturated TAG content, and nutritionally unhealthy mainly due to the palmitic acid content in the *sn-*2 TAG position (Renaud et al., J. Nutr. 125:229-237 (1995)). High oleic vegetable oils are liquid to temperatures below 0°C but are less stable than the olein fraction of the present invention. Therefore, uses where stable and liquid oil is required could not be fulfilled with these oils. Healthy oils with good oxidative stability should have a low content of saturated fatty acids, comprising preferably stearate because it is neutral in respect to the serum cholesterol levels (Pearson, Am. J. Clin. Nutr., 60(S):10715-10725, (1994); Kelly et al., Eur. J. of Clinical Nutr., 55:88-96, (2001)), and should not have saturated fatty acids in the middle position (sn-2) of the triacylglyceride. Oils with saturated fatty acids in the middle position of the triacylglyceride have been suggested to be responsible for the atherogenic effects of these oils (Renaud et al., J. Nutr. 125:229-237 (1995)).

### SUMMARY OF THE INVENTION

The present invention provides an olein fraction of high-oleate and high-saturated sunflower oil having superior oxidative stability, that is liquid at a temperature near to or below 0°C and with a triacylglyceride composition that makes it healthy compared to other high saturated stable oils like palm oil or palm olein. Dry or solvent fractionation of high-oleate and high-saturated oil could be utilised to obtain the olein of the invention. The invention also provides the different uses of the oil. The improved characteristics of the olein fraction permit it to be used in several food and non-food products in situations where liquid oils with increased oxidative stability, fry stability and shelf-life stability are desirable, being at the same time a healthy product.

The oxidative stability of oils is defined by the fatty acid composition of TAGs. TAGs rich in polyunsaturated fatty acids are more unstable than triglycerides rich in saturated and monounsaturated fatty acids. Unsaturated fatty acids found in commodity oils are oleate, linoleate and linolenate having one, two and three double bonds, respectively. Linolenate is the most unstable fatty acid and responsible for the fishy flavours and therefore should be as low as possible in stable oils, preferably as traces (below 0.5%). Oils with linolenate above this value are not good starting material to fractionate the olein of this invention. W00019832 teaches how a high-stearate and high-oleate oil from *Brassica* could be obtained. In addition, some fractions of stearin and olein were obtained. WO99057990 teaches furthermore how a high-stearate and high-oleate oil from soybean could be obtained and how, in addition, some stearin and olein fractions were obtained. All the oils and fractions shown in these patent publications have more than 0.5% of linolenate Therefore, none of these previous oils or their fractions are a good material to obtain the olein fraction of the present invention.

Some tropical olein fractions blended with standard commodity oils have been proposed to be used as frying fats. As taught in WO2006/061100, an olein fraction from tropical shea butter could be blended with commodity oils resulting in a frying fat. However, shea butter has the disadvantage that it is rather rare, obtained from a tropical trees. For oil manufacture on an industrial scale sourcing may become a problem.
Oils made mainly of saturated and monounsaturated fatty acids have very good stability, but, taking into account the TAG biosynthesis in plants, some TAGs with two or three saturated fatty acids should be synthesised, disaturated TAGs will precipitate, even at room temperature, making this oils solidify very easily. Oils liquid as low as 0°C and stable are of industrial interest. Sunflower oils with high-stearate in high-oleate background have very good oxidative stability but are easily solid. Fractions of this oil without most of the disaturated TAGs should have good stability and will be liquid at a temperature of around 0°C.

### DETAILED DESCRIPTION OF THE INVENTION

It is therefore the object of the present invention to provide a new oil that is both liquid at low temperatures and resistant to oxidation.

The invention thus relates to stable and liquid oil fractions made by fractionation of high oleic, high saturated sunflower oil, characterized in that:
a. less than 8.6% of the TAG species of said oil fraction have the general formula SMS and
b. at least 26% of TAG species of said oil fraction have the general formula SMM
wherein S represents a saturated fatty acid and M represents a monoenoic fatty acid.

The oil fraction of the invention has a cloud point lower than 5°C, preferably lower than 0°C, more preferably lower than -6°C.

The stable and liquid oil fraction of the invention is obtainable by low temperature fractionation of a high oleic, high saturated sunflower oil.

In a first embodiment, the low temperature fractionation is a dry fractionation, which includes the following steps:
- decreasing the temperature of the oil to 12 °C, more preferably 9.5 °C, even more preferably 5°C, optionally with stirring;
- separating the olein from the solid fraction; and
- optionally fractionating the resulting olein again at 2.5 °C, more preferable 0 °C to obtain a less saturated olein fraction.

In another embodiment the low temperature fractionation is a solvent fractionation which includes the following steps:
- mixing the oil with an organic solvent like acetone, hexane or ethyl ether;
- decreasing the temperature of the oil solution to 0°C, preferably -5°C;
- separating the olein from the solid fraction; and
- optionally recovering the olein by removing the solvent from the supernatant.
   In a particular embodiment, the solvent is removed from the supernatant by distillation at vacuum.

High-saturated and high-oleate sunflower oils for use as a starting material for preparing the oil fraction of the invention can be extracted from seeds described in WO0074470 or WO9964546 or Alvarez-Ortega et al. Lipids. 1997, 32, 833-837. The triacylglyceride composition of these oils can be found in Fernandez-Moya et al. J. Agric. Food Chem. 2005, 53, 5326-5330 and Serrano-Vega et al. Lipids 2005, 40, 369-374. Tables 1 and 2 show the triacylglyceride molecular species and triacylglyceride class composition of high-oleate and high-stearate oil in comparison with a high-oleate oil.

**Table 1.- Triacylglyceride composition of the high-oleate and high-stearate sunflower oil (CAS-15) compared with a control high-oleate sunflower oil (CAS-9).**

| | Triacylglyceride content (mol %) | |
|---|---|---|
| Triacylglyceride | CAS-9 | CAS-15 |
| POP | - | 0.5 |
| POE | 0.4 | 4.5 |
| POO | 6.4 | 6.2 |
| PLE | - | 0.6 |
| POL | - | 1.4 |
| PLL | - | - |
| EOE | 0.5 | 10.4 |
| EOO | 11.7 | 37.7 |
| ELE | - | - |
| OOO | 70.9 | 14.3 |
| EOL | - | 7.7 |
| OOL | 6.6 | 4.0 |
| ELL | - | 1.2 |
| OLL | - | 0.8 |
| EOA | - | 1.5 |
| OOA | 0.9 | 2.8 |
| OLA | - | 0.5 |
| EOB | - | 1.4 |
| OOB | 2.5 | 3.7 |
| OLB | - | 0.7 |

| | | |
|---|---|---|
| P = palmitic acid = 16:0; E = stearic acid = 18:0; O = oleic acid = 18:1; L = linoleic acid = 18:2; A = araquidic acid = 20:0; B = behenic acid = 22:0 | | |

**Table 2.- Triacylglyceride class composition of the high-oleate and high-stearate sunflower oil (CAS-15) compared with a control high-oleate sunflower oil (CAS-9). S = saturated fatty acid, M = monoenoic fatty acid and D = dienoic fatty acid, U = Unsaturated fatty acid.**

| | CAS-9 | CAS-15 |
|---|---|---|
| SMS | 0.9 | 18.3 |
| SDS | - | 0.6 |
| SMM | 21.5 | 50.4 |
| SDM | - | 10.3 |
| SDD | - | 1.2 |
| MMM | 70.9 | 14.3 |
| MDM | 6.6 | 4.0 |
| MDD | - | 0.8 |
| SUS | 0.9 | 18.9 |
| SUU | 21.5 | 61.9 |
| UUU | 77.5 | 19.1 |

The olein fraction of the invention can be obtained from the oil extracted from these seeds. The invention is however not limited to the olein fractionated from the oil extracted from these seeds. Solvent or dry fractionation of other high-stearate and high-oleate oils can also provide an olein fraction according to the invention. Solvent fractionation is made with equal amounts of acetone, hexane or ethyl ether and cooling the mixture to 0°C. After centrifugation at 10000x g in a Sorvall preparative centrifuge at 0°C a precipitate, the stearine fraction, and a supernatant, the olein fraction, could be separated. The liquid olein fraction has very low content of disaturated TAGs and an increased content of unsaturated TAGs, Table 3 and 4 show the composition of an example of the original oil and the olein fraction. The olein fraction has a reduced amount of the disaturated TAGs POP, POS, SOS, SOA and SOB.

**Table 3.- Triacylglyceride composition of a olein fraction from high-oleate high-saturated sunflower oil compared with the original oil (HOHS).**

| | Triacylglyceride content (%) | |
|---|---|---|
| Triacylglyceride | HOHS | Olein |
| POP | 0.3 | 0.2 |
| POE | 2.3 | 1.1 |
| POO | 6.7 | 7.3 |
| POL | 0.7 | 0.7 |
| EOE | 4.2 | 0.9 |
| EOO | 34.4 | 36.7 |
| OOO | 31.7 | 35.0 |
| EOL | 2.7 | 2.7 |
| OOL | 4.2 | 4.7 |
| OLL | 0.4 | 0.4 |
| EOA | 0.9 | 0.4 |
| OOA | 3.4 | 3.6 |
| OLA | 0.3 | 0.0 |
| EOB | 1.1 | 0.0 |
| OOB | 6.6 | 6.2 |

| | | |
|---|---|---|
| P = palmitic acid = 16:0; E = stearic acid = 18:0; O = oleic acid = 18:1; L = linoleic acid = 18:2; A = araquidic acid = 20:0; B = behenic acid = 22:0 | | |

**Table 4.- Triacylglyceride class composition of a olein fraction from high-oleate high-saturated sunflower oil compared with the original oil (HOHS). S = saturated fatty acid, M = monoenoic fatty acid and D = dienoic fatty acid.**

| Triacylglyceride class | Triacylglyceride content (%) | |
|---|---|---|
| | HOHS | Olein |
| SMS | 8.9 | 2.7 |
| SDS | - | - |
| SMM | 51.1 | 53.8 |
| SDM | 3.7 | 3.4 |
| SDD | - | - |
| MMM | 31.7 | 35.0 |
| MDM | 4.2 | 4.7 |
| MDD | 0.4 | 0.4 |
| DDD | - | - |

It was surprisingly found that oils of this type have excellent stability properties, in accelerated stability oxidation experiments, and are liquid at temperatures near 0°C and below.

The stability of the oil of the invention can be expressed as the amount of altered TAGs (oxidized triacylglyceride monomers and polymerized triacylglyceride) after an accelerated oxidation test. For the present invention, the test has been carried out by introducing 2 g of the oils into a oven at 180°C and sampling 50 mg at 2 h intervals to determine altered TAGs. Remaining oils after 10 h treatment were taken out and additionally analyzed for polar compounds and distribution in oxidized TAG monomers and TAG polymers.
From this it follows that oil of the invention is liquid at low temperatures around 0°C and significantly stable. The triacylglyceride composition of oils of the invention is significantly different from the prior art oils as will be demonstrated in the Examples.

The oil of the invention is a natural oil that can be extracted from sunflower seeds and obtained by low temperature dry or solvent fractionation. This olein fraction is thermostable without modification methods as hydrogenation of fatty acid double bonds, transesterification of any other chemical modification. The oil of the invention is obtained without performing such artificial modification processes.

A preferred olein sunflower oil fraction of the invention further comprises less than 8.6% of TAG species having the general formula SMS and at least 26% of SMM. In addition it is preferred that the oil fractions of the invention have less than 8% saturated fatty acids at position sn-2 of the TAGs that constitute the oil, preferably less than 5%, more preferably less than 3%.

The saturated fatty acids are usually stearic acid and palmitic acid. It is preferred that the oil fraction of the invention has relatively high-stearate content, because the oil will then be healthier. To ensure the maximal thermostability it is preferred that the total SMM should be at least 30%, more preferably at least 35%, most preferably 45% or more.

It is preferred that the oil in addition has a high oleic acid content and a correspondingly low linoleic acid, because oleic acid is more stable than linoleic acid and has very good nutritional properties. It is preferred that the oil has in addition less than 15% linoleic acid, more preferably less than 10%, most preferably 5% or lower.

It is also preferable than the linolenate content should be below 0.5%, because linolenate is the most unstable fatty acid of commodity oils and it is responsible of the fishy flavours.

The olein fraction of the invention is thermostable in the sense that it resists oxidation and polymerization of the TAGs that constitute the oil better than high-oleate oils do. As a consequence thereof, the olein fraction of the invention is particularly suitable for long life storage and for frying and cooking at temperatures of at least 100°C, preferably 160°C or 180°C. Frying is intended to encompass frying and stir-frying of food stuffs, such as meat, fowl, fish, fruits, vegetables etc. as well as deep-frying of pastry, fries, snacks. Furthermore, the oil of the invention is also suitable for baking, roasting, cooking, and the production of mayonnaise, light mayonnaise, reduced fat mayonnaise, mustard, ketchup, tartar sauce, sandwich spread, salad bar bottle, salad dressing, pre-cooked food, prepared soup, sauces, cream, etc.

In a more general sense the invention relates to the use of an olein fraction, having less than 15% saturated fatty acids and less than 10%, preferably less than 5% linoleic acid at high temperature conditions. The high temperature conditions are selected from frying and baking.

The invention is not limited to the oil as such. The invention relates also to the use of the oil in mixtures with other oils. In mixtures the overall properties may differ from the oil of the invention.

The olein fraction of the invention can be used with some antioxidants or other additives to improve its properties, mainly in discontinuous frying operations, as taught in Márquez-Ruiz et al. Eur. J. Lipid Sci. Technol. 106 (2004) 752-758. In this paper it is shown that some silicones and particularly dimethylpolysiloxane (DMPS) added to oils and fats at very low concentrations improve their properties mainly in discontinuous frying operations. This additive has been widely used in commodity frying oils as inhibitor of thermo-oxidative reactions in deep frying.
The invention further relates to a method for preparation of a stable and liquid oil fraction by low temperature fractionation of a high oleic, high saturated sunflower oil. The method is a low temperature fractionation and is preferably either a dry fractionation or a solvent fractionation.

In a first embodiment of the method the low temperature fractionation is a dry fractionation, which includes the following steps:
- decreasing the temperature of the oil to 12 °C, more preferably 9.5 °C, even more preferably 5°C, with or without stirring;
- separating of the olein from the solid fraction; and
- optionally fractionating the resulting olein again at 2.5 °C, more preferable 0 °C to obtain a less saturated olein fraction.

In another embodiment, the low temperature fractionation is a solvent fractionation which includes the following steps:
- mixing the oil with an organic solvent like acetone, hexane or ethyl ether;
- decreasing the temperature of the oil solution to 0°C, preferably -5°C;
- separating the olein from the solid fraction;
- optionally recovering the olein by removing the solvent from the supernatant by distillation at vacuum.

As used herein, the terms "oil fraction", "olein fraction" and "oil of the invention" are used interchangeably. Although the product of the invention is a fraction from an oil it is itself still an oil and thus also referred to as "oil".

The present invention will be further illustrated in the Examples that follow and that are in no way intended to limit the invention. In the Examples reference is made to the following figure:
**Figure.** Courses of polymerization of different oils at 180°C. Common sunflower (CAS-6), high-oleic sunflower (CAS-9), high-oleic high-palmitic sunflower (CAS-12), high-oleic high-stearic oils (HOHS-17%E and HOHS-20%E) and supernatants of fractionation of high oleate high stearate oils at 0°C (supernatant 1) and -5°C (supernatant 2) were studied.

### EXAMPLES

### EXAMPLE 1

### Preparation of Seeds Containing an Oil of the Invention

The oil of the invention can be prepared from seeds of the deposited strain IG-1297M or from seeds that are obtained in any other way. One other way of obtaining such seed is illustrated hereinbelow.
Some examples of the fatty acid composition of the oils used in this patent could be found in the table 5.

**Table 5.- Fatty acid composition of some oils used in this patent.**

| | Fatty acid composition (mol %) | | | | | |
|---|---|---|---|---|---|---|
| Sunflower oil | 16:0 | 18:0 | 18:1 | 18:2 | 20:0 | 22:0 |
| Standard | 4.96 | 7.8 | 28.39 | 57.24 | 0.43 | 1.17 |
| High-oleic | 3.71 | 7.28 | 85.48 | 1.18 | 0.7 | 1.64 |
| HOHS 17%E | 4.45 | 17.75 | 70.37 | 3.34 | 1.52 | 2.56 |
| HOHS 20%E | 4.55 | 20.2 | 67.49 | 2.87 | 1.74 | 3.16 |
| HOHS 24E | 5.12 | 24.0 | 61.63 | 4.14 | 2.18 | 2.93 |
| HOHS 253 | 5.71 | 19.6 | 57.91 | 12.83 | 1.46 | 2.36 |

### EXAMPLE 2

### 1. Plant Material

Mature high-saturated and high-oleate sunflower seeds as described in WO0074469 or Fernandez-Moya et al. J Agr Food Chem. 2000, 48, 764-769 with or without palmitoleate or in Fernandez-Moya et al. J. Agric. Food Chem. 2005, 53, 5326-5330 or in WO0074470 with high-stearate content in high-oleate background were used. As control materials mature seeds from a normal sunflower line (standard) and a high oleic line (HO) were used.

### 2. Extraction of the Oil

At a laboratory scale, the oils used for the preparation of the oil fraction of this invention were extracted from seeds using a process comprising the crushing of the seeds to a fine powder that was mixed with 1/5 w/w of anhydrous sodium sulphate. Then, the resulting cake was packed in filter paper cartridges containing 25 g approx. of the mixture and extracted in Sohxlett for 16h using heptane as the solvent. The oil enriched mixture recovered in the solvent reservoir was distilled at vacuum at 80°C and the traces of solvent stripped by applying a flow of nitrogen.

An alternative method involved the crushing of the seeds to a fine powder and the discontinuous extraction of the oil by mixing the ground seeds with 2 vols by weight of heptane. The suspension was transferred to screwed-capped flasks and kept at 80°C for 2h. Then one vol. of 10g/L NaCl in methanol was added and phases let to separate. The heptane-enriched supernatant was withdrawn and distilled at vacuum at 80°C. The oil was finally stripped wit a flow of nitrogen to remove traces of solvent.

For larger scale extraction seed oil was extracted using a continuous oil press with a capacity of 8 kg/h. Batches of 5 kg were extracted and then refined. Since these oils displayed low content of phosphate they were not degummed. Removal of the excess of free fatty acids was carried out by neutralization with 12° Baumé (2.18 M) lye at 15°C for 40 min. Soapstocks were removed by centrifugation and the oil was then water washed. The next step was oil bleaching by treatment with activated bleaching clay (1% w/w) at 70°C for 10 min. Finally the oil was deodorized by applying 3% steam at 200°C for 3h under vacuum for 3 h.

### EXAMPLE 3

### Characterization of TAGs

### 1. TAG Distribution in the oils

Purified TAG from sunflower seeds of the invention were obtained by passing 3 g oil dissolved in 3 ml petroleum ether over alumina, which had been activated at 200°C for 3 h immediately before use. The alumina (1.5 g. times.2) was placed into two small columns connected by a piece of silicone tube and the lipid solution placed on the top and allowed to filter through the alumina. The columns were washed further with 6 ml petroleum ether. The solvent was evaporated and the purified TAG flushed with nitrogen and stored at -20°C.

The TAG were devoid of tocopherols as determined by HPLC following the IUPAC Standard Method 2432 (IUPAC Standard Methods for the Analysis of Oils, Fats and Derivatives, Blackwell, Oxford, 7.sup.th ed. (1987)).

The composition of TAG molecular species was carried out by gas chromatography of the purified TAG using a DB-17-HT (Agilent Technologies, USA) capillary column 15 m. times 0.25 mm I.D., 0.1 .microm film thickness, hydrogen as the carrier gas and FID detector, According to J Agr Food Chem. 2000, 48, 764-769.

### EXAMPLE 4

### 1.- Fractionation of oils using solvents.

Oils extracted from seeds mentioned in example 1 were dissolved in 3 volumes of an organic solvent, such as hexane, acetone or ethyl ether. Other oil to solvent ratios yield the same results, see "Edible Fats and Oils Processing: Basic Principles and Modem Practices", 1990, World Conference Proceedings, American Oil Chemists' Society. Then they were kept at low temperature for periods of 24 h. Supernatants were separated from precipitates by centrifugation at 5000 x g and solvent removed from the oil fraction by flushing with nitrogen. Oil fractions were stored at -20°C under atmosphere of nitrogen. Two cuts were fulfilled at 0°C and -5°C, yielding oleins of different composition and properties.

**Table 6.- Triacylglycerol composition of high stearic-high oleic oils and different fractions prepared by fractionation with acetone at 0°C (sup. 1) and -5°C (sup. 2).**

| Triacylglyceride | Triacylglyceride composition (mol %) | | | | | |
|---|---|---|---|---|---|---|
| | HOHS 253 | HOHS 24E | Sup. 1_253 | Sup. 1_24E | Sup 2_253 | Sup. 2_24E |
| POP | 0.82 | 0.83 | 0.62 | 0.57 | 0.69 | 0.72 |
| PLP | 0.23 | | 0.2 | | 0.22 | |
| POE | 4.03 | 5.72 | 1.95 | 1.54 | 1.67 | 1.3 |
| POO | 8.54 | 8.13 | 9.53 | 13.75 | 11.63 | 15.77 |
| PLE | 1.52 | 0.23 | 1.41 | 0.37 | 1.14 | 0.38 |
| POL | 1.83 | 1.06 | 2.13 | 1.86 | 2.31 | 2.24 |
| PLL | 1.18 | | 1.16 | 0.21 | 1.18 | |
| EOE | 5.28 | 10.07 | 1.12 | 1.04 | 0.68 | 0.59 |
| EOO | 27.67 | 39.24 | 30.3 | 32.74 | 27.38 | 30.22 |
| ELE | 2.01 | 0.6 | 1.1 | | | 0.23 |
| OOO | 21.24 | 15.45 | 23.74 | 26.06 | 27.02 | 28.58 |
| EOL | 6.34 | 4.92 | 6.91 | 6.23 | 6.09 | 6.16 |
| OOL | 4.57 | 2.95 | 5.05 | 5.37 | 5.23 | 5.63 |
| ELL | 4.7 | | 5.17 | | 5.23 | |
| OLL | 1.57 | 0.35 | 2.14 | 0.8 | 2.34 | 0.35 |
| LLL | 1.06 | | 1.23 | | 0.92 | |
| EOA | 1.14 | 1.56 | | 0.14 | 0.42 | |
| OOA | 1.91 | 3.22 | 2.16 | 4.65 | 2.05 | 4.27 |
| OLA | 0.24 | 0.23 | 0.3 | 0.55 | 0.65 | 0.49 |
| EOB | 0.61 | 1.37 | | 0.19 | | |
| OOB | 2.98 | 3.76 | 3.22 | 3.44 | 2.51 | 2.69 |
| OLB | 0.54 | 0.3 | 0.53 | 0.49 | 0.65 | 0.38 |

| | | | | | | |
|---|---|---|---|---|---|---|
| P = palmitic acid = 16:0; E = stearic acid = 18:0; O = oleic acid = 18:1; L = linoleic acid = 18:2; A = araquidic acid = 20:0; B = behenic acid = 22:0 | | | | | | |

### Solvent fractionation of high-oleic high-stearic oils.

Examples of solvent fractionation could be found in the table 6. Two high-oleic and high stearic oils (HOHS 253 and HOHS 24E, extracted from seeds of lines CAS-15 and CAS-33 described in Fernandez-Moya et al. J. Agric. Food Chem. 2005, 53, 5326-5330 or from seeds described in WO0074470), were fractionated with acetone at 0°C and their respective olein fractions selected (Sup 1_253 and Sup 1_24E), two another fractions were obtained at -5°C (Sup 2_253 and Sup 2_24E).

Fractions obtained at 0 and -5°C have reduced content of disaturated TAG such as POS, SOS, SOA, SOB etc. The TAG composition could be shown as TAG classes according to the saturated (S) monounsaturated (M) and diunsaturated (D) TAG content. Table 7 shows the data grouped as stated above.

**Table 7.- Triacylglyceride class composition of high stearic-high oleic oils and different fractions prepared by fractionation with acetone at 0°C (sup. 1) and -5°C (sup. 2). S = saturated fatty acid, M = monoenoic fatty acid and D = dienoic fatty acid, U = unsaturated fatty acid.**

| | Triacylglyceride composition (mol %) | | | | | |
|---|---|---|---|---|---|---|
| Triacylgliceride Classes | HOHS 253 | HOHS 24E | Sup. 1_253 | Sup. 1_24E | Sup 2_253 | Sup. 2_24E |
| SMS | 11.88 | 19.55 | 3.69 | 3.48 | 3.46 | 2.61 |
| SDS | 3.76 | 0.83 | 2.71 | 0.37 | 1.36 | 0.61 |
| SMM | 41.1 | 54.35 | 45.21 | 54.58 | 43.57 | 52.95 |
| SMD | 8.95 | 6.51 | 9.87 | 9.13 | 9.7 | 9.27 |
| SDD | 5.88 | - | 6.33 | 0.21 | 6.41 | - |
| MMM | 21.24 | 15.45 | 23.74 | 26.06 | 27.02 | 28.58 |
| MMD | 4.57 | 2.95 | 5.05 | 5.37 | 5.23 | 5.63 |
| MDD | 1.57 | 0.35 | 2.14 | 0.8 | 2.34 | 0.35 |
| DDD | 1.06 | - | 1.23 | - | 0.92 | - |
| SUS | 15.64 | 20.38 | 6.4 | 3.85 | 4.82 | 3.22 |
| SUU | 55.93 | 60.86 | 61.41 | 63.92 | 59.68 | 62.22 |
| UUU | 28.44 | 18.75 | 32.16 | 32.23 | 35.51 | 34.56 |

### Solvent fractionation of high-oleic high-palmitic oils.

Other saturated oil from sunflower, such as the high-palmitic and high-oleic oils, were also fractionated and an olein fraction obtained. This olein fraction has reduced amounts of disaturated TAG.

The TAG composition of the original high-oleic and high-palmitic sunflower oil (HOHP) and the fractions obtained with acetone at 0 and -5° C after 24 h, named Sup.1 and Sup. 2 respectively, are shown in the table 8.

The TAG composition could be shown as TAG classes. Table 9 shows the TAG classes of the original HOHP oil and the Sup. 1 and Sup. 2 fractions.

The olein fractions have a reduced amount of disaturated TAG, such as SMS and a increased amount of monosaturated TAG and triunsaturated TAG such as SMM and MMM.

**Table 8.- Triacylglycerol composition of high oleic-high palmitic oil and different fractions prepared by fractionation with acetone at 0°C (supernatant 1) and -5°C (supernatant 2).**

| | Triacylglyceride composition (mol %) | | |
|---|---|---|---|
| Triacylgliceride | HOHP | Sup. 1 | Sup. 2 |
| PPoP | 0.62 | 0.71 | 0.35 |
| PPoPo | 0.28 | 0.44 | 0.64 |
| POP | 17.5 | 7.02 | 2.26 |
| PAsP | 0.66 | - | 0.29 |
| PPoO | 9.87 | 16.46 | 13.44 |
| PPoL | 1.3 | 2.49 | 2.64 |
| POE | 1.85 | 0.64 | 0.48 |
| POO | 30.9 | 36.31 | 29.73 |
| POAs | 5.41 | 7.07 | 7.01 |
| POL | 8.22 | 12.3 | 12.54 |
| PoOO | 1.41 | - | 2.68 |
| PoOL | 0.54 | 0.56 | 0.82 |
| EOE | 0.25 | - | - |
| EOO | 2.22 | 1.99 | 3.67 |
| OOO | 10.99 | 8.08 | 13.38 |
| OOAs | 3.74 | 3.35 | 5.57 |
| OOL | 1.43 | 0.92 | 1.49 |
| POB | 0.96 | 0.15 | 0.4 |
| OOA | 0.25 | 0.22 | 0.4 |
| OOB | 1.02 | 0.59 | 1.2 |

| | | | |
|---|---|---|---|
| P = palmitic acid = 16:0; Po= palmitoleic acid = 16:1; E = stearic acid = 18:0; O = oleic acid = 18: 1^{Δ9}; As= asclepic acid= 18:1^{Δ11}; L = linoleic acid = 18:2; A = araquidic acid = 20:0; B = behenic acid = 22:0 | | | |

**Table 9.- Triacylglyceride class composition of high oleic-high palmitic oil and different fractions prepared by fractionation with acetone at 0°C (supernatant 1) and -5°C (supernatant 2). S = saturated fatty acid, M = monoenoic fatty acid and D = dienoic fatty acid, U = unsaturated fatty acid.**

| | Triacylglyceride composition (mol %) | | |
|---|---|---|---|
| Triacylgliceride Classes | HOHP | Sup. 1 | Sup. 2 |
| SMS | 21.84 | 8.52 | 3.78 |
| SDS | - | - | - |
| SMM | 49.95 | 63.08 | 56.09 |
| SMD | 9.52 | 14.79 | 15.18 |
| SDD | - | - | - |
| MMM | 16.14 | 11.43 | 21.63 |
| MMD | 1.97 | 1.48 | 2.31 |
| MDD | - | - | - |
| DDD | - | - | - |
| SUS | 21.84 | 8.52 | 3.78 |
| SUU | 59.47 | 77.87 | 71.27 |
| UUU | 18.11 | 12.91 | 23.94 |

### 2. Dry fractionation of oils.

Oils were fractionated without solvents by cooling the oils for 24-48 h without any solvent. The resulting precipitates were sedimented by centrifugation at 5000 x g for 30 min at the temperature of fractionation. Oleins were separated as the supernatants. The temperatures of fractionation ranged from 12 to 0 °C. Dry fractionation is described in "Edible Fats and Oils Processing: Basic Principles and Modem Practices", 1990, World Conference Proceedings, American Oil Chemists' Society, pages. 136-141 and 239-245.

During low temperature storage saturated TAG crystals are formed and could be separated from liquid oil through centrifugation, cold press, etc. Some examples of dry fractionation are shown in the tables 10 and 11. Original high oleic and high-stearic oil was kept at 9.5°C, and the olein called sup 1 was recovered as the supernatant. Olein Sup 1 was then fractionated at 5°C for 24h, resulting in the olein called sup 2 as the supernatant. Sup 2 was subsequently fractionated again at 2.5 °C for 24 h and sup 3 in tables 10 and 11 were obtained. As in the solvent fractionation, the disaturated TAG decrease while the more unsaturated TAG species increase. The same results shown as TAG classes could be found in the table 11.

**Table 10.- Triacylglicerol composition of high stearic-high oleic oil and different fractions prepared by dry fractionation at 9.5°C (supernatant 1), 5°C (supernatant 2) and 2.5°C (supernatant 3).**

| | Triacylglyceride composition (mole %) | | | |
|---|---|---|---|---|
| Triacylglyceride | HOHE | Sup. 1 | Sup. 2 | Sup. 3 |
| POP | 0.56 | 0.46 | 0.51 | 0.45 |
| POE | 3.38 | 2.36 | 2.19 | 2.34 |
| POO | 7.18 | 7.9 | 8 | 8.21 |
| PLE | - | - | 0.19 | - |
| POL | 0.98 | 1.18 | 1.14 | 1.07 |
| EOE | 6.7 | 3.15 | 2.82 | 2.81 |
| EOO | 36.65 | 39.46 | 37.38 | 38.23 |
| ELE | 0.47 | - | 0.33 | 0.3 |
| OOO | 25.42 | 27.78 | 28.52 | 28.59 |
| EOL | 4.98 | 5.22 | 5.33 | 5.13 |
| OOL | 4.76 | 4.96 | 5.13 | 5.01 |
| OLL | 0.32 | - | 0.37 | 0.22 |
| EOA | 0.98 | 0.39 | 0.4 | 0.31 |
| OOA | 2.87 | 3.06 | 2.98 | 3.01 |
| OLA | 0.27 | - | 0.26 | 0.27 |
| EOB | 0.82 | - | 0.28 | 0.24 |
| OOB | 3.47 | 4.1 | 3.81 | 3.41 |
| OLB | 0.2 | - | 0.31 | 0.38 |

| | | | | |
|---|---|---|---|---|
| P = palmitic acid = 16:0; E = stearic acid = 18:0; O = oleic acid = 18:1; L = linoleic acid = 18:2; A = araquidic acid = 20:0; B = behenic acid = 22:0 | | | | |

**Table 11.- Triacylglyceride class composition of high stearic-high oleic oil and different fractions prepared by dry fractionation at 9.5°C (supernatant 1), 5°C (supernatant 2) and 2.5°C (supernatant 3). S = saturated fatty acid, M = monoenoic fatty acid and D = dienoic fatty acid.**

| | Triacylglyceride composition (mole %) | | | |
|---|---|---|---|---|
| TAG class | HOHE | Sup. 1 | Sup. 2 | Sup. 3 |
| SMS | 12.44 | 6.36 | 6.2 | 6.15 |
| SDS | 0.47 | 0 | 0.52 | 0.3 |
| SMM | 50.17 | 54.52 | 52.17 | 52.86 |
| SMD | 6.43 | 6.4 | 7.04 | 6.85 |
| SDD | - | - | - | - |
| MMM | 25.42 | 27.78 | 28.52 | 28.59 |
| MMD | 4.76 | 4.96 | 5.13 | 5.01 |
| MDD | 0.32 | 0 | 0.37 | 0.22 |
| DDD | - | - | - | - |
| SUS | 12.91 | 6.36 | 6.72 | 6.45 |
| SUU | 56.6 | 60.92 | 59.21 | 59.71 |
| UUU | 30.5 | 32.74 | 34.02 | 33.82 |

Dry fractionation of a given oil is very dependent on the temperatures used for triacylglycerides crystallization. Therefore, the composition of the resulting olein fractions was different. The data stated in the tables 12 an 13 below correspond to the dry fractionation of a high oleic high stearic oil sequentially at 12, 2.5 and 0°C for 24 h.
Oil fractionation at lower temperatures produced more liquid olein with a lower content of TAGs of the form SMS at the expense of classes more unsaturated like MMM or MMD. The occurrence of TAGs of the form SMM reached a maximum in the sup 1 and then slightly decreased in sup 2 and sup 3 at the expense of more unsaturated species like MMM and MMD.

**Table 12. Triacylglycerol composition of high stearic-high oleic oil and different fractions prepared by dry fractionation at 12°C (sup 1), 2.5°C (sup. 2) and 0°C (sup. 3).**

| | Triacylglyceride composition (mole %) | | | |
|---|---|---|---|---|
| Triacylglyceride | HOHS 310 | Sup. 1 | Sup. 2 | Sup. 3 |
| POP | 0.56 | 0.47 | 0.47 | 0.32 |
| POE | 3.78 | 2.58 | 2.42 | 1.61 |
| POO | 7.55 | 7.35 | 7.68 | 8.17 |
| POL | 0.92 | 1 | 1.04 | 0.99 |
| EOE | 7.45 | 3.88 | 3.18 | 1.74 |
| EOO | 38.49 | 41.63 | 40.75 | 37.3 |
| OOO | 24.77 | 26.02 | 27.38 | 32.1 |
| EOL | 4.44 | 5.19 | 5.11 | 4.93 |
| OOL | 4.14 | 4.62 | 4.86 | 6.09 |
| OLL | | | | 0.29 |
| EOA | 1 | 0.52 | 0.3 | |
| OOA | 2.58 | 2.75 | 2.83 | 3.06 |
| EOB | 1.34 | 0.9 | 0.76 | |
| OOB | 2.99 | 3.1 | 3.23 | 3.41 |

| | | | | |
|---|---|---|---|---|
| P = palmitic acid = 16:0; E = stearic acid = 18:0; O = oleic acid = 18:1; L = linoleic acid = 18:2; A = araquidic acid = 20:0; B = behenic acid = 22:0 | | | | |

**Table 13.- Triacylglyceride class composition of high stearic-high oleic oil and different fractions prepared by dry fractionation at 12°C (supernatant 1), 2.5°C (supernatant 2) and 0°C (supernatant 3). S = saturated fatty acid, M = monoenoic fatty acid and D = dienoic fatty acid, U = unsaturated fatty acid.**

| | Triacylglyceride composition (mole %) | | | |
|---|---|---|---|---|
| Triacylgliceride | | | | |
| class | HOHS 310 | Sup. 1 | Sup. 2 | Sup. 3 |
| SMS | 14.13 | 8.35 | 7.13 | 3.67 |
| SDS | | | | |
| SMM | 51.61 | 54.83 | 54.49 | 51.94 |
| SMD | 5.36 | 6.19 | 6.15 | 5.92 |
| SDD | | | | |
| MMM | 24.77 | 26.02 | 27.38 | 32.1 |
| MMD | 4.14 | 4.62 | 4.86 | 6.09 |
| MDD | | | | 0.29 |
| DDD | | | | |
| SUS | 14.13 | 8.35 | 7.13 | 3.67 |
| SUU | 56.97 | 61.02 | 60.64 | 58.15 |
| UUU | 28.91 | 30.64 | 32.24 | 38.48 |

### EXAMPLE 5

For many food purposes a liquid oil is preferable, for example for deep frying most companies prefer liquid oils to avoid thermal isolation and heating to avoid solidification of fats. The cloud point is defined as the temperature in which the oil become turbid due to solidification of TAGs in a given conditions. It measures when a oil started to be solid and some crystals of solid fat appear because of the low temperature. Oils with lower cloud points are liquid at lower temperatures. Also when food products need to be stored in the refrigerator, a liquid oil with a cloud point near or below to 0°C is preferable. To measure the cloud point of olein fractions with different SUS contents and control oils, amounts of 10g of each were transferred to glass screwed-capped tubes and were heated to 80°C to remove any trace of solids. Then they were moved to a thermostatized bath endowed with a lamp and a window allowing to examine the turbidity of the oils. The initial temperature of the bath was 30°C, then temperature was decreased at the rate of 2 °C each 20 min. to reach a final temperature of -10°C. The cloud points were visually established as the temperature in which a given oil became turbid.

**Table 14.- Cloud points of different oils and olein fractions.**

| Sunflower oil | SUS content (%) | Cloud point (°C) |
|---|---|---|
| Standard | 2 | -8 |
| High-oleic | 1 | -8 |
| High-oleic and high-stearic | 19 | 24 |
| Olein A | 3 | -4 |
| Olein B | 1 | -6 |
| Olein C | 4 | -1 |
| Olein D | 7 | 4 |

Table 14 shows the cloud point of standard and high-oleic oils, both have the same cloud point of -8 °C. Therefore, they started to become solid at temperatures below 0°C, but the high saturated oils have cloud point of 20 °C, they are solid in the refrigerator. The olein fractions prepared by solvent or dry fractionation of a high oleic-high stearic oil have cloud points near 0°C and below and close to standard and high-oleic oils. Their behaviour in refrigerator temperatures is similar to standard and high-oleic oils.

### EXAMPLE 6

### Thermostability

### Purification of TAGs

TAGs from different oils and fractions were purified and devoid of tocopherols before carrying out the studies of thermostability by using the protocol described in example 3.

Upon heating the quality of an oil can deteriorate because the TAG's constituting the oil are oxidized and/or polymerized. To test the thermostability a heat treatment at 180°C. during 10 h was performed as follows.

Thermoxidative treatment of the samples was carried out under strictly controlled conditions according to Barrera-Arellano et al., Grasas Aceites 48, 231-235 (1997)). Briefly, 2.00±0.01 g of purified TAG were weighed out in standard glass tubes of 13 cm.times.1 cm I.D., and in turn introduced into an oven at 180.0±0.1°C. Samples of 50 mg were withdrawn at 2 h intervals for the analysis of polymerized TAG. After heating for a total period of 10 h, final samples were taken out and additionally analyzed for polar compounds and distribution in oxidized TAG monomers and TAG polymers. Rancimat™ instructions were carefully observed for cleaning of vessels and temperature correction. No bubbling of air was applied during heating and the vessels were left open.

Polymerized TAG in the various oils were quantified by high-performance size exclusion chromatography (HPSEC) following a modification of the IUPAC Standard Method 2508 (supra) by means of using a light scattering detector instead of a refraction index detector in the HPLC.. Total polar compounds and their distribution in oxidized TAG monomers and TAG polymers were determined by a combination of adsorption chromatography and HPSEC (Dobarganes et al. Fat Sci. Technol. 90, 308-311 (1988)).

Conditions applied for HPSEC were as follows: Separations were carried out in a Waters 2695 Module (Milford, MA) endowed with a Waters 2420 ELS detector Data was processed using Empower software. Ultrastyragel columns (Waters Associates, Milford, Mass., USA) connected in series and operated at 35°C (25 cm .times.0.77 cm I.D.), were packed with a porous, highly cross-linked styrene divinyl bencene copolymer (<10 Am). HPLC-grade tetrahydrofuran served as the mobile phase with a flow of 1 mL/min. Sample solutions of 50 mg oil/mL and 15 mg polar compounds/ml in tetrahydrofuran were used for the analysis of polymerized TAG and polar compounds distribution, respectively.

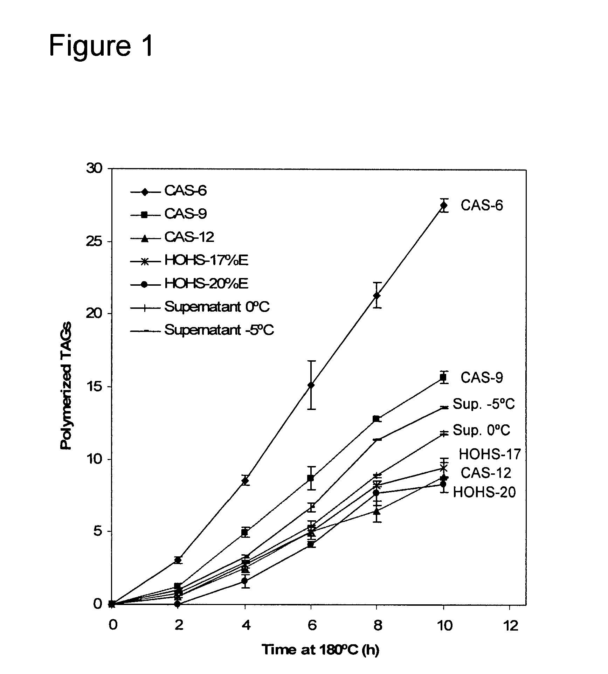

Monitoring the formation of dimers, polymers and altered TAGs in conditions similar to those used in industrial and domestic frying gives information about the oxidative stability of the given oils and fractions. Therefore, purified TAGs from common sunflower oil, which was rich in linoleic acid (Table 5) displayed the highest rate of polymerization (Figure 1), reaching 28 % of polymerized TAGs after 10 h at 180°C. in the high oleic oil CAS-9 Fernandez-Moya et al. J. Agric. Food Chem. 2005, 53, 5326-5330. TAGs were more stable than common sunflower oil but they polymerized more quickly than those from both supernatants obtained by fractionation of HOHS oils at 0°C and -5°C. Thus, these olein fractions, containing high levels of TAGs of the form SUU and low of SUS displayed higher stabilities than common and high oleic sunflower oils as well as low cloud points, which makes them stable liquid oils suitable for frying, baking, roasting, cooking and production of high stability mayonnaise, light mayonnaise, reduced fat mayonnaise, mustard, ketchup, tartar sauce, sandwich spread, salad bar bottle, salad dressing, pre-cooked food, prepared soup, sauces and cream.
High stearic-high oleic oils HSHO 17% and HSHO 20% and high palmitic high oleic oil displayed similar rates of polymerization, slightly lower than the supernatant of 0°C due to their high content of saturated fatty acids, which make them semisolid at room temperature. Furthermore, data corresponding to altered TAGs after 10 h at 180°C was in good agreement with the polymerization course (table 15). Common and high oleic oils displayed the highest content of altered TAGs, followed by the olein fractions isolated from HSHO oils supernatant 1 and supernatant 2, teaching again than these were stable liquid oils. The lowest content of altered TAGs was found in high saturated semisolid HSHO and HPHO oils.

**Table 15. Altered triacylglyceride composition of different oils and olein fractions after 10 h at 180°C.**

| | Altered TAGs (% w/w) | | | |
|---|---|---|---|---|
| | Monomers | Dimers | Oligomers | Total |
| Standard | 8.8 | 10.2 | 17.4 | 36.3 |
| High-oleic | 12.4 | 9.6 | 6.1 | 28.1 |
| High-oleic and high-palmitic | 8.3 | 5.9 | 2.9 | 17.1 |
| HOHS 17%E | 7.8 | 6.0 | 3.4 | 17.3 |
| HOHS20%E | 8.2 | 5.5 | 2.8 | 16.5 |
| Supernatant 0°C | 9.4 | 7.1 | 4.7 | 21.3 |
| Supernatant -5°C | 10.8 | 8.5 | 6.4 | 25.7 |

## Claims

1. Stable and liquid oil fraction made by fractionation of high oleic, high saturated sunflower oil, **characterized in that**:
a. less than 8.6% of the TAG species of said oil fraction have the general formula SMS and
b. at least 26% of TAG species of said oil fraction have the general formula SMM
wherein S represents a saturated fatty acid and M represents a monoenoic fatty acid.

2. Stable and liquid oil fraction as claimed in claim 1, **characterized in that** the total linolenic acid content in said oil fraction is lower than 0.5% .

3. Stable and liquid oil fraction as claimed in claim 1 or 2, **characterized in that** the linoleic acid content in said oil fraction is lower than 15%, preferably lower than 10%, preferably lower than 5%.

4. Stable and liquid oil fraction as claimed in claims 1 and 2, **characterized in that** preferably less than 6%, more preferably less than 4% of the TAG species of said oil fraction have the general formula SMS.

5. Stable and liquid oil fraction as claimed in any one of the claims 1-4, **characterized in that** preferably at least 30%, more preferably at least 35%, most preferably at least 45% of the TAG species of said oil have the general formula SMM.

6. Stable and liquid oil fraction as claimed in any one of the claims 1-5, **characterized in that** it has less than 8%, preferably less than 5%, more preferably less than 3% of saturated fatty acids at position sn-2 of the TAGs that constitute said oil fraction.

7. Stable and liquid oil fraction as claimed in any one of the claims 1-6, **characterized in that** it has a cloud point lower than 5°C, preferably lower than 0°C, more preferably lower than -6°C.

8. Stable and liquid oil fraction as claimed in any one of the claims 1-7, obtainable by low temperature fractionation of a high oleic, high saturated sunflower oil.

9. Stable and liquid oil fraction as claimed in claim 8, **characterized in that** the low temperature fractionation is a dry fractionation, which includes the following steps:
- decreasing the temperature of the oil to 12 °C, more preferably 9.5 °C, even more preferably 5°C, optionally with stirring;
- separating the olein from the solid fraction; and
- optionally fractionating the resulting olein again at 2.5 °C, more preferable 0 °C to obtain a less saturated olein fraction.

10. Stable and liquid oil fraction as claimed in claim 8, **characterized in that** the low temperature fractionation is a solvent fractionation which includes the following steps:
- mixing the oil with an organic solvent like acetone, hexane or ethyl ether;
- decreasing the temperature of the oil solution to 0°C, preferably -5°C;
- separating the olein from the solid fraction; and
- optionally recovering the olein by removing the solvent from the supernatant.

11. Stable and liquid oil fraction as claimed in claim 10, **characterized in that** solvent is removed from the supernatant by distillation at vacuum.

12. Method for preparation of a stable and liquid oil fraction by low temperature fractionation of a high oleic, high saturated sunflower oil.

13. Method as claimed in claim 12, **characterized in that** the low temperature fractionation is a dry fractionation, which includes the following steps:
- decreasing the temperature of the oil to 12 °C, more preferably 9.5 °C, even more preferably 5 °C, with or without stirring;
- separating of the olein from the solid fraction; and
- optionally fractionating the resulting olein again at 2.5 °C, more preferable 0 °C to obtain a less saturated olein fraction.

14. Method as claimed in claim 12, **characterized in that** the low temperature fractionation is a solvent fractionation which includes the following steps:
- mixing the oil with an organic solvent like acetone, hexane or ethyl ether;
- decreasing the temperature of the oil solution to 0 °C, preferably -5 °C;
- separating the olein from the solid fraction;
- optionally recovering the olein by removing the solvent from the supernatant by distillation at vacuum.

15. Use of a stable and liquid oil fraction as claimed in any one of the claims 1-11 for the production of sauces, particularly mayonnaise, light mayonnaise, reduced fat mayonnaise, mustard, ketchup and tartar sauce, salad dressings, salad bar bottle, sandwich spreads, pre-cooked food, prepared soup or cream, and ice-cream or ice-cream cake.

16. Use of a stable and liquid oil fraction claimed in any one of the claims 1-11 at high temperature conditions through heating by any means at temperatures of at least 100°C and in particular for frying, baking, cooking and roasting.

17. Use as claimed in claim 16, wherein the high temperature conditions comprise temperatures of at least 160°C, more preferably at least 180°C.

18. Oil mixture including a stable and liquid oil fraction as claimed in any one of the claims 1 to 11.
